(19) Europäisches Patentamt
European Patent Office
Office européen des brevets

(11) **EP 3 388 250 A1**

(12) **EUROPÄISCHE PATENTANMELDUNG**

(43) Veröffentlichungstag:
**17.10.2018  Patentblatt 2018/42**

(51) Int Cl.:
***B42D 25/305*** *(2014.01)*   ***B41M 3/14*** *(2006.01)*
***G06K 19/06*** *(2006.01)*   ***G07D 7/0043*** *(2016.01)*

(21) Anmeldenummer: **18166082.0**

(22) Anmeldetag: **06.04.2018**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **13.04.2017  DE 102017206466**

(71) Anmelder: **tesa scribos GmbH
69126 Heidelberg (DE)**

(72) Erfinder:
• **Borgsmüller, Stefan
  69126 Heidelberg (DE)**
• **Schulte-Wieking, Kay
  69115 Heidelberg (DE)**
• **Aulbach, Jochen
  Heidelberg 69124 (DE)**

(74) Vertreter: **Erbe, Claudia
tesa SE
Kst. 9500
Hugo-Kirchberg-Strasse 1
22848 Norderstedt (DE)**

(54) **SICHERHEITSMERKMAL MIT KOPIERSCHUTZ**

(57)     Die Erfindung betrifft ein Verfahren zur Herstellung eines Sicherheitsmerkmals, indem eine Information als maschinell lesbarer grafischer Code zur Verfügung gestellt wird, der grafische Code in eine reelle Amplitudenfunktion einer zweidimensionalen, diskreten, komplexen Funktion G(fx, fy) mit einer fx-Frequenzkoordinate und einer fy-Frequenzkoordinate eingebettet wird, die zweidimensionale, diskrete, komplexe Funktion G(fx, fy) Fourier-transformiert wird, ein Realteil einer Fourier-Transformierten g(x,y) ermittelt wird und der Realteil der Fourier-Transformierten g(x, y) zu einem zweidimensionalen Bild binarisiert wird und das zweidimensionale, binarisierte Bild (2) gedruckt wird, wobei entlang beider Frequenzkoordinaten fx, fy jeweils eine maximal genutzte Frequenz fx_max, fy_max und jeweils eine maximal erreichbare Frequenz fx_limit, fy_limit bestimmt werden, entlang jeder Koordinate ein Verhältnis

$$\text{Pfx} = \frac{P(fx)\_max}{\text{Pfx\_limit}}, \quad \text{Pfy} = \frac{P(fy)\_max}{\text{Pfy\_limit}}$$

von maximal genutzter Frequenz und maximal erreichbarer Frequenz bestimmt wird und das binarisierte Bild (2) mit einer Pixelauflösung von mindestens dem kleineren Wert der beiden Werte

$$\frac{300\,DPI}{\text{Pfx}}, \quad \frac{300\,DPI}{P(yx)}$$

gedruckt wird und das binarisierte Bild (2) zumindest als Teil des Sicherheitsmerkmals verwendet wird.

**EP 3 388 250 A1**

Fig. 3

**Beschreibung**

Die Erfindung betrifft ein Verfahren zur Herstellung eines Sicherheitsmerkmals nach dem Oberbegriff des Anspruchs 1. Die Erfindung betrifft auch ein Verfahren zur Authentifizierung eines gedruckten Sicherheitsmerkmals nach dem Oberbegriff des Anspruchs 20. Die Erfindung betrifft des Weiteren ein gedrucktes Sicherheitsmerkmal mit einem gedruckten, zweidimensionalen, binarisierten Bild nach dem Oberbegriff des Anspruchs 25.

Aus der DE 198 06 295 A1 ist ein Zugangsberechtigungs- oder Identifikationsmedium mit einer Vorder- und einer Rückseite bekannt, das auf der Vorderseite ein Bild des Gesichtes einer Person trägt, wobei das Medium computergenerierte, holografische Informationen des Bildes in codierter Form speichert, indem die holografische Information als Beugungsmuster codiert gespeichert ist. Nachteiligerweise ist die Vervielfältigung des Sicherheitselementes durch Fotokopie möglich.

Aus der US 2010/0060944 A1 ist ein Verfahren zum Authentifizieren von Dokumenten bekannt, bei dem das Dokument eingescannt wird und dann Fourier-transformiert wird. Das Fourier-transformierte Bild wird mit der Fourier-Transformierten eines Masterprofils verglichen.

Die Konstruktion des Sicherheitselementes ist technisch aufwendig. Nachteiligerweise ist jedoch die Vervielfältigung des Sicherheitselementes durch Fotokopie möglich. Weiterhin nachteilig ist die Authentifizierung durch einen Bildvergleich, der entweder durch einen Menschen durchgeführt werden müsste oder im maschinellen Fall komplexe Bildverarbeitungsalgorithmen benötigen würde, die anfällig für Fehleinschätzungen sind.

Der Erfindung liegt daher die Aufgabe zugrunde, ein eingangs genanntes Verfahren zur Herstellung eines Sicherheitsmerkmals zu verbessern. Der Erfindung liegt auch die Aufgabe zugrunde, ein Verfahren zur Authentifizierung eines gedruckten Sicherheitsmerkmals zur Verfügung zu stellen. Der Erfindung liegt in einem dritten Aspekt die Aufgabe zugrunde, ein schwer kopierbares Sicherheitsmerkmal zur Verfügung zu stellen.

Hinsichtlich des Verfahrens zur Herstellung eines Sicherheitsmerkmals wird die Aufgabe durch ein Verfahren mit den Verfahrensmerkmalen des Anspruchs 1 gelöst.

Das erfindungsgemäße Verfahren zur Herstellung eines Sicherheitsmerkmals geht davon aus, dass Informationen nicht direkt sichtbar auf einem Produkt oder dessen Verpackung aufgebracht werden sollen. Bei dieser Information kann es sich um Seriennummern, Produktkennzeichen, Personenkennzeichen, Daten einer Datenbank oder Ähnliches handeln. Die Informationen werden in einem maschinell lesbaren, grafischen Code, bspw. einem 2D Barcode oder einem 1D Barcode oder einem QR Code, zur Verfügung gestellt. Die Informationen sind in dem 2D Barcode zwar kodiert, jedoch wäre die Reproduktion des Barcodes durch Abfotografieren und Fotokopieren relativ leicht möglich.

Der maschinell lesbare, grafische Code wird in eine reelle Amplitudenfunktion einer zweidimensionalen, diskreten komplexen Funktion $G(fx,fy)$ mit einer $fx$-Frequenzkoordinate und einer $fy$-Frequenzkoordinate eingebettet; d. h. grundsätzlich können komplexe Zahlen oder komplexe Funktionen als Summe des Real- und Imaginärteils bzw. einer realen Funktion und imaginären Funktion oder auch als in Polarkoordinatenschreibweise als Amplitudenfunktion und Phasenfunktion dargestellt werden. Das erfindungsgemäße Verfahren geht davon aus, den grafischen Code als Amplitudenfunktion einer zweidimensionalen diskreten komplexen Funktion $G(fx,fy)$ zur Verfügung zu stellen. Die Amplitudenfunktion hat bevorzugt über die zwei Frequenzkoordinaten $fx$ und $fy$ entweder den Funktionswert 0 oder den Funktionswert 1.

Die zweidimensionale, diskrete, komplexe Funktion $G(fx,fy)$ kann zunächst weiterbearbeitet werden. Insbesondere kann der reellen Amplitudenfunktion eine Phasenfunktion hinzugefügt werden. Die Phasenfunktion hat die Aufgabe, das Frequenzspektrum der Amplitudenfunktion zu glätten.

Es können der reellen Amplitudenfunktion aber auch andere Funktionen hinzugefügt werden.

Die zweidimensionale, diskrete, komplexe Funktion $G(fx,fy)$ wird dann Fourier-transformiert und die daraus resultierende Fourier-Transformierte $g(x,y)$ wird zu einem zweidimensionalen Bild binarisiert. Zur Binarisierung kann der Realteil der Fourier-Transformierten $g(x,y)$ ermittelt werden und mittels eines Schwellenwerts binarisiert werden. Binarisierung eines Bildes bedeutet hier, dass jedem Pixel des Bildes entweder der Wert 1 oder der Wert 0 zugeordnet wird. Alternativ kann auch der Realteil oder die Phase der Fourier-Transformierten $g(x,y)$ ermittelt werden und mittels eines Schwellenwerts binarisiert werden. Weitere Binarisierungsmöglichkeiten sind aus dem Stand der Technik bekannt (Goodman, J. W., Introduction to Fourier Optics, McGraw-Hill (New York) (1996)).

Das zweidimensionale, binarisierte Bild wird gedruckt. Überraschenderweise hat sich gezeigt, dass an den Ausdruck des binarisierten Bildes hinsichtlich seiner Auflösung bestimmte Bedingungen gestellt werden müssen, damit das binarisierte Bild durch eine weitere Fourier-Transformation auch wieder in den grafischen Code verwandelt und der grafische Code maschinell ausgelesen werden kann. Erfindungsgemäß werden entlang der Frequenzkoordinaten $fx$ und $fy$ jeweils eine maximal genutzte Frequenz $fx\_max$ und $fy\_max$ und jeweils eine maximal erreichbare Frequenz $fx\_limit$ und $fy\_limit$ bestimmt. Die maximal erreichbaren Frequenzen werden durch die Pixelanzahl $M \times N$ des Bereiches bestimmt, in dem der Barcode eingebettet ist.

Die maximal genutzten Frequenzen werden durch die tatsächliche Einbettung des grafischen Codes in den zur Verfügung stehenden Bereich bestimmt.

Entlang jeder der Koordinaten wird das Verhältnis Pfx und Pfy von maximal genutzter Frequenz zu maximal erreichbarer Frequenz bestimmt und das binarisierte Bild wird mit einer Pixelauflösung von mindestens dem kleineren Wert der beiden Werte $\frac{300\,DPI}{Pfx}$, $\frac{300\,DPI}{Pfy}$ gedruckt und das binarisierte Bild wird dann zumindest als Teil des Sicherheitsmerkmals verwendet. Wenn das binarisierte Bild mit der genannten Auflösung gedruckt wird, besteht ein Kopierschutz, d. h. das binarisierte Bild wird so fein mit so vielen Details und Substrukturen gedruckt, dass ein herkömmliches Fotografieren und erneutes Ausdrucken üblicherweise so viel von der Struktur zerstört, dass eine Rekonstruktion des grafischen Codes durch Fourier-Transformation nicht mehr möglich ist.

Besonders bevorzugt wird das binarisierte Bild mit einer Pixelauflösung von mindestens dem kleineren Wert von $\frac{450\,DPI}{Pfx}$, $\frac{450\,DPI}{Pfy}$, vorzugsweise dem kleineren Wert von $\frac{600\,DPI}{Pfx}$, $\frac{600\,DPI}{Pfy}$, vorzugsweise $\frac{800\,DPI}{Pfx}$, $\frac{800\,DPI}{Pfy}$, besonders bevorzugt $\frac{1000\,DPI}{Pfx}$, $\frac{1000\,DPI}{Pfy}$, besonders bevorzugt durch den kleineren Wert von $\frac{1200\,DPI}{Pfx}$, $\frac{1200\,DPI}{Pfy}$ gedruckt.

Besonders bevorzugt wird für die Binarisierung ein Schwellenwert verwendet, der ein binarisiertes Bild mit 50 % weißen und 50 % schwarzen Pixeln erzeugt, es sind jedoch auch Binarisierungen mit beliebig anderen Schwellenwerten denkbar, insbesondere Schwellenwerte, die einen geringeren Anteil an zu druckenden schwarzen Pixeln ergeben, z. B. 40 % schwarze Pixel und 60 % weiße Pixel. Dies ist insbesondere von Vorteil, da Drucker meist größere Punkte drucken als die Rastergröße des zugrundeliegenden Druckrasters. Dadurch neigen Ausdrucke mit hoher Auflösung zum "Zulaufen" der schwarzen Punkte, wodurch Information verlorengeht. Dieser Effekt kann durch einen geeigneten Schwellenwert reduziert werden, indem der Anteil an zu druckenden Pixeln gesenkt wird.

Besonders bevorzugt kann das binarisierte Bild vor dem Ausdruck vervielfältigt werden, und die identischen, binarisierten Bilder können nebeneinander sowohl in x- als auch in y-Richtung oder jeweils nur in einer der beiden Richtungen angeordnet werden. So kann das binarisierte Bild als großflächiges Sicherheitsmerkmal Verwendung finden.

Besonders bevorzugt wird das binarisierte Bild mit einem binären Bild UND-verknüpft. Bei dem binären Bild kann es sich um eine einfache geometrische Form wie einen Kreis, ein Quadrat, ein Rechteck, aber auch um komplizierte geometrische Formen handeln. Die UND-Verknüpfung macht von der Eigenschaft der Fourier-Transformierten Gebrauch, d. h. dass die Information über eine große Fläche gleichmäßig verteilt ist und das Ausschneiden einer geometrischen Form der Rekonstruktion des grafischen Codes keinen Abbruch tut.

In einer besonders bevorzugten Ausführungsform der Erfindung wird der Realteil der Fourier-Transformierten g(x,y) mit einem variablen Schwellenwert binarisiert, indem eine Höhe des Schwellenwertes mit einem Grauwert eines Grauwertbildes korreliert wird. Bei dem Grauwertbild kann es sich um ein Schwarz-Weiß-Foto einer Person oder um eine sonstige geometrische Form oder Ähnliches handeln.

In einer weiteren Ausführungsform der Erfindung ist es möglich, das binäre Bild zu verschlüsseln. Dieses kann auf verschiedene Weise geschehen. Günstigerweise wird der Fourier-Transformierten g(x,y) ein Phasenschlüssel hinzugefügt, d. h. die Fourier-Transformierte wird mit einer weiteren komplexen Funktion multipliziert oder gefaltet, und dann wird der Realteil der verschlüsselten Fourier-Transformierten berechnet. Der Phasenschlüssel muss natürlich gespeichert werden, damit er zur Rekonstruktion der verschlüsselten Fourier-Transformierten verwendet werden kann.

In einer anderen Variante der Verschlüsselung können Bereiche oder einzelne Pixel der Fourier-Transformierten g(x,y) miteinander verwürfelt werden, d. h. paarweise vertauscht oder durcheinander vertauscht werden, und danach wird die Binarisierung durchgeführt. Auch hier muss die Verwürfelung gespeichert werden, damit diese zur Rekonstruktion des grafischen Codes zur Rücktransformation wieder hinzugezogen werden kann.

Das binarisierte Bild kann digital gedruckt werden, z.B. mittels eines Tintenstrahldruckers oder eines Laserdruckers. Das binarisierte Bild kann das Sicherheitsmerkmal selbst oder Teil eines größeren Sicherheitsmerkmals sein.

Die Aufgabe wird in ihrem zweiten Aspekt hinsichtlich des Verfahrens zur Authentifizierung eines gedruckten Sicherheitsmerkmals durch ein Verfahren mit den Merkmalen des Anspruchs 20 gelöst.

Das gemäß den oben genannten Verfahrensschritten erzeugte Sicherheitsmerkmal muss authentifiziert werden können. Erfindungsgemäß wird zur Authentifizierung zunächst ein elektronisches Bild des Sicherheitsmerkmals aufgenommen, wobei das Sicherheitsmerkmal ein erfindungsgemäß binarisiertes Bild enthält. Das binarisierte Bild wird in eine komplexe Funktion g2(x,y) eingebettet, und die komplexe Funktion g2(x,y) wird in eine komplexe Funktion G2(fx,fy) Fourier-transformiert. Erfindungsgemäß wird auf die komplexe Funktion G2(fx, fy) ein Lesealgorithmus angewendet und die komplexe Funktion maschinell ausgelesen. Das Sicherheitsmerkmal wird als authentisch bewertet, wenn der Lesealgorithmus einen grafischen Code erkennt, und das Sicherheitsmerkmal wird als nicht authentisch bewertet, wenn der Lesealgorithmus keinen grafischen Code erkennt. Als grafischer Code kann entweder ein eindimensionaler Barcode, ein zweidimensionaler Barcode oder ein QR Code oder sonstiger Code vorgesehen sein. Der Lesealgorithmus ist auf den zu erwartenden Code abgestimmt.

Wie bei der Erzeugung des Sicherheitsmerkmals offenbart, ist es erfindungsgemäß vorgesehen, das Sicherheitsmerkmal mit einer hohen Auflösung auszudrucken. Die Auflösung ist so hoch, dass bei einer Kopie mit einem üblichen Office-Kopierer die Substrukturen des Sicherheitsmerkmals, insbesondere die des binären Bildes des Sicherheitsmerkmals, verlorengehen.

Bei dem erfindungsgemäßen Verfahren zur Authentifizierung führt das dann dazu, dass nach der Fourier-Transformation die komplexe Funktion G2(fx,fy) nicht mehr den grafischen Code als Information enthält, zumindest nicht mehr in einem hinreichenden Maße, um den grafischen Code auslesen zu können. Es wird daher kein grafischer Code erkannt und das eingescannte Sicherheitsmerkmal als nicht authentisch verworfen.

Vorzugsweise wird das binarisierte Bild als Realteil einer komplexen Funktion g2(x,y) aufgefasst, und besonders bevorzugt wird aus der komplexen Funktion G2(fx,fy) die Amplitudenfunktion gebildet und der Lesealgorithmus auf die Amplitudenfunktion der komplexen Funktion G2(fx,fy) angewendet.

In einer bevorzugten Ausführungsform des erfindungsgemäßen Authentifizierungsverfahrens werden die ausgelesenen Daten zusätzlich noch mit in einer Datenbank abgelegten Daten verglichen und das Ergebnis des Vergleichs zu einer Einstufung des Sicherheitsmerkmals als authentisch oder nicht authentisch herangezogen.

Wenn das binarisierte Bild mit einem Phasenschlüssel zusätzlich gesichert ist durch eines der oben beschriebenen Verfahren, wird die Funktion g2(x,y) zunächst mit einem inversen Phasenschlüssel bearbeitet, der den Phasenschlüssel, der bei der Herstellung des Sicherheitselementes verwendet wurde, aufhebt, und erst dann Fourier-transformiert.

Genauso wird in einer alternativen Ausführungsform des Verschlüsselungsverfahrens die Funktion g2(x,y) rückverwürfelt, so dass die Verwürfelung des Sicherheitselementes ebenfalls aufgehoben und erst dann Fourier-transformiert wird.

Hinsichtlich des Sicherheitsmerkmals wird die Aufgabe durch ein Sicherheitsmerkmal mit den Merkmalen des Anspruchs 25 erfüllt.

Das erfindungsgemäße Sicherheitsmerkmal umfasst ein gedrucktes, zweidimensionales, binarisiertes Bild, das durch Binarisierung aus einer Fourier-Transformierten g(x,y) berechnet ist, die die Fourier-Transformierte einer zweidimensionalen, diskreten, komplexen Funktion G(fx,fy) mit einer fx-Frequenzkoordinate und einer fy-Frequenzkoordinate ist, in der ein maschinenlesbarer grafischer Code eingebettet ist.

Dabei ist der grafische Code in einer der oben beschriebenen Weisen in die Amplitudenfunktion eingebettet. Erfindungsgemäß ist das binarisierte Bild mit einer Pixelauflösung von mindestens dem kleineren der beiden Werte $\frac{300\,DPI}{Pfx}$, $\frac{300\,DPI}{Pfy}$ gedruckt, besonders bevorzugt mit dem kleineren Wert von $\frac{450\,DPI}{Pfx}$, $\frac{450\,DPI}{Pfy}$, vorzugsweise dem kleineren Wert von $\frac{600\,DPI}{Pfx}$, $\frac{600\,DPI}{Pfy}$, vorzugsweise $\frac{800\,DPI}{Pfx}$, $\frac{800\,DPI}{Pfy}$, besonders bevorzugt $\frac{1000\,DPI}{Pfy}$, besonders bevorzugt mit dem kleineren Wert von $\frac{1200\,DPI}{Pfx}$, $\frac{1200\,DPI}{Pfy}$.

Günstigerweise ist entlang der beiden Frequenzkoordinaten fx, fy der Funktion G(fx,fy) jeweils eine maximal genutzte Frequenz fx_max und fy_max vorgesehen und jeweils eine maximal erreichbare Frequenz fx_limit und fy_limit. Entlang jeder Koordinate ist das Verhältnis $Pfx = \frac{Pfx\_max}{Pfx\_limit}$ sowie $Pfy = \frac{Pfy\_max}{Pfy\_limit}$ von maximal genutzter Frequenz und maximal erreichbarer Frequenz bestimmt.

Der grafische Code kann in der oben beschriebenen Weise Seriennummern, Produktkennzeichen, Personenkennzeichen oder Daten einer Datenbank enthalten, wobei dann die Daten mit dem Inhalt der Datenbank bei der Authentifizierung abgeglichen werden.

Günstigerweise ist das Sicherheitsmerkmal nicht in einer der üblichen Druckfarben gedruckt, insbesondere nicht in schwarz, grau, cyan, magenta oder gelb. Dabei kann das Sicherheitsmerkmal in rot, blau oder grün gedruckt werden, aber auch andere unübliche Farben sind möglich. Dies erhöht den Schutz vor Kopien mit Office-Kopierern o. Ä. erheblich, da bei einer solchen Kopie die nicht übliche Druckfarbe aus anderen Farben zusammengesetzt werden müsste. Grün müsste z. B. aus cyan und gelb zusammengesetzt werden. Die verschiedenen Farben werden in gewöhnlichen Druckern in verschiedenen Druckvorgängen bzw. mit verschiedenen Druckköpfen gedruckt, wobei deutliche Passerfehler zwischen den Druckfarben auftreten können, die die Struktur so weit zerstören, dass die Kopie des Sicherheitsmerkmals nicht mehr lesbar ist.

Des Weiteren sind vorzugsweise Substrukturen des Sicherheitsmerkmals in einer Auflösung von mindestens 300 DPI vorhanden.

Dass das Sicherheitsmerkmal digital gedruckt werden kann, ist ein großer Vorteil der Erfindung. Insbesondere mithilfe des Digitaldrucks können Serien des Sicherheitsmerkmals in hoher Stückzahl gedruckt werden, wobei jedes einzelne Sicherheitsmerkmal einer Serie serialisierte, d. h. individualisierte, einzigartige Informationen wie Seriennummern, Produkt- oder Personenkennzeichen tragen kann. Die serialisierte Information unterscheidet die Sicherheitsmerkmale voneinander, vorzugsweise paarweise voneinander. Diese für jedes Sicherheitselement einzigartigen Daten werden im Authentifizierungsverfahren gelesen und können gegen eine Datenbank abgeglichen werden.

Die Erfindung wird anhand von mehreren Ausführungsbeispielen in 24 Figuren beschrieben. Dabei zeigen:

Fig. 1     einen zweidimensionalen Barcode,

Fig. 2     eine dem zweidimensionalen Barcode zugeordnete Zufallsphase,

Fig. 3     den zweidimensionalen Barcode in Fig. 1, aufgefasst als Amplitudenfunktion einer komplexen Funktion G(fx,fy),

Fig. 4     ein erfindungsgemäßes binarisiertes Sicherheitsbild aufgefasst als Realteil von g(x,y)

Fig. 5     eine Rekonstruktion des Barcodes in Fig. 4,

Fig. 6     ein Foto des ausgedruckten, binarisierten Sicherheitsbildes in Fig. 4,

Fig.7      eine Rekonstruktion des Barcodes aus dem Foto des Sicherheitsbildes in Fig. 6,

Fig. 8     ein Foto einer Kopie des Sicherheitsbildes in Fig. 4, die mit einem Office-Kopierer erstellt wurde und eine Auflösung von 600 DPI besitzt,

Fig. 9     eine Rekonstruktion des Barcodes aus der Kopie in Fig. 8,

Fig. 10    ein binarisiertes Bild der Funktion g(x,y) mit 40 % der Pixel in schwarz,

Fig. 11    das binarisierte Bild der Funktion g(x,y) mit 60 % der Pixel schwarz,

Fig. 12    die Rekonstruktion des Barcodes aus dem binarisierten Bild in Fig. 10

Fig. 13    die Rekonstruktion des Barcodes aus dem binarisierten Bild in Fig. 11,

Fig. 14a   das binarisierte Bild eines Kreises,

Fig. 14b   das binarisierte Bild aus Fig. 4 in einer UND-Verknüpfung mit dem Bild aus Fig. 4a,

Fig. 15    die Rekonstruktion des Barcodes aus dem verknüpften, binarisierten Bild in Fig. 14b,

Fig. 16    das binarisierte Bild aus Fig. 4 in einer logischen UND-Verknüpfung mit dem Bild eines QR-Codes,

Fig. 17    die Rekonstruktion des Barcodes aus dem Bild in Fig. 16,

Fig. 18a   ein Grauwertbild,

Fig. 18b   ein binarisiertes Bild, mit dem der Schwellwert der Binarisierung von dem Grauwertbild in Fig. 18a abgeleitet ist,

Fig. 19    die Rekonstruktion des Barcodes aus dem Bild in Fig. 18b,

Fig. 20a   ein weiteres Grauwertbild,

Fig. 20b   ein binarisiertes Bild, bei dem ein Schwellwert der Binarisierung aus dem Grauwertbild in Fig. 20a abgeleitet ist,

Fig. 21    die Rekonstruktion des Barcodes aus dem Bild in Fig. 20b.

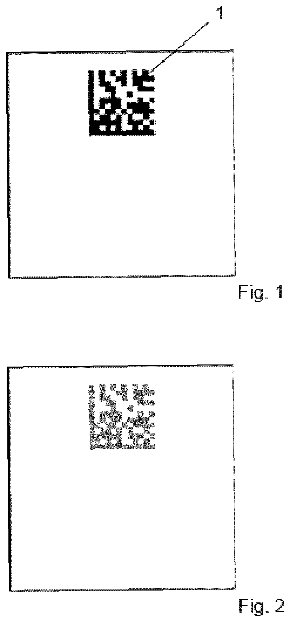

Fig. 1 zeigt einen 2D Barcode 1 als ein Beispiel eines maschinell lesbaren, grafischen Codes. Der Code ist zweidimensional grafisch ausgebildet. Der 2D Barcode 1 ist in einem Bild mit 256x256 Pixeln eingebettet.

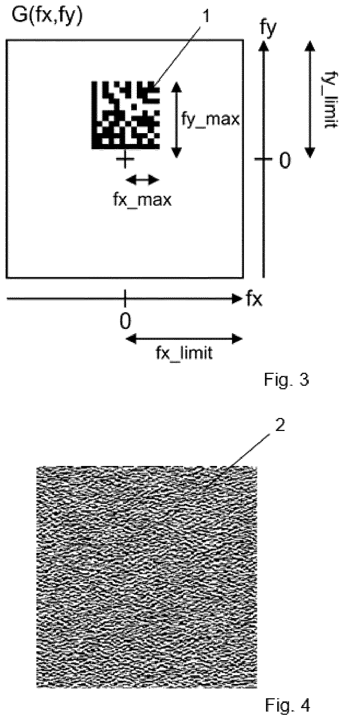

Der in der Fig. 1 dargestellte 2D Barcode 1 wird gemäß Fig. 3 als Amplitudenfunktion einer diskreten, zweidimensionalen, komplexen Funktion G(fx,fy) mit MxN Pixeln aufgefasst. M bedeutet dabei die Anzahl der Pixel in fx-Richtung und N die Anzahl der Pixel in fy-Richtung. Die beiden Koordinaten fx und fy werden im Weiteren als Frequenzkoordinaten interpretiert. Das Zentrum der zweidimensionalen Funktion G(fx,fy) entspricht den beiden Frequenzen fx = fy = 0. Die Ränder der zweidimensionalen Funktion G(fx,fy) in der Fig. 3 in fx-Richtung und fy-Richtung entsprechen der maximal erreichbaren Frequenz in fx-Richtung und in fy-Richtung, die als fx_limit und fy_limit bezeichnet werden. Durch die Positionierung des 2D Barcodes 1 in der Amplitude von G(fx,fy) ergibt sich eine maximal genutzte Frequenz in fx-Richtung und in fy-Richtung, die als fx_max bzw als fy_max bezeichnet wird. Das Verhältnis aus maximal genutzter Frequenz fx_max bzw. fy_max zu maximal erreichbarer Frequenz fx limit bzw. fy_limit wird in fx-Richtung als $Pfx = \frac{\text{fx\_max}}{\text{fx\_limit}}$ und in fy-Richtung als

$Pfy = \frac{\text{fy\_max}}{\text{fy\_limit}}$ bezeichnet. Dieses Verhältnis ist immer $\leq 1$. Wird der 2D Barcode 1 bis an die Ränder positioniert, so ist fx_max = fx_limit und fy_max = fy_limit und Px = 1 und Py = 1.

Die Werte der Amplitudenfunktion G(fx,fy) betragen 0 oder 1 und bilden durch entsprechende Zuordnung damit den 2D Barcode 1 in Fig. 3 ab. Die in Fig. 3 benutzen Verhältnisse aus maximal genutzter Frequenz und maximal erreichbarer Frequenz betragen Pfx = 0,29 und Pfy = 0,66.

Der Amplitude der komplexen Funktion G(fx,fy) wird eine geeignete Phasenfunktion e^{iφ}(fx,fy) zugefügt, um das Frequenzspektrum zu glätten. Bei der Phasenfunktion e^{iφ}(fx,fy) kann es sich um eine Zufallsphase handeln, jedoch sind im Stand der Technik auch andere Phasenverteilungen bekannt (Akahori, H., Comparison of deterministic phase coding with random phase coding in terms of dynamic range, Appl. Opt. 12, S. 2336-43 (1973)). In Fig. 2 ist die Phasenfunktion als zufälliger Grauwert dargestellt. Innerhalb des schwarzen Bereichs des 2D Barcodes 1 wird jedem Pixel ein zufälliger Grauwert zwischen schwarz und weiß zugeordnet; wenn dieser Grauwert schwarz ist, beträgt die Phase 2 π, und wenn der Grauwert weiß ist, beträgt die Phase 0. Die anderen Grauwerte werden stetig je nach Graustufe einem Winkel zwischen 2 π und 0 zugeordnet. Auf diese Weise kann das zufällige Grauwertbild in eine Phasenfunktion umgewandelt werden und durch Multiplikation der in Fig. 3 grafisch dargestellten Amplitudenfunktion mit der Phasenfunktion, wird die komplexe Funktion G(fx,fy) gebildet. Die komplexe Funktion G(fx,fy) wird Fourier-transformiert, wodurch eine weitere zweidimensionale, komplexe Funktion mit MxN Pixeln, die diskrete zweidimensionale Fourier-Transformierte g(x,y), entsteht. Alternativ zur Fourier-Transformation kann bei diesem Verfahren eine inverse Fourier-Transformation verwendet werden, da sich aufgrund der Symmetriebedingungen zwischen Fourier-Transformation und inverser Fourier-Transformation keine für die Erfindung relevanten Unterschiede ergeben.

Die Fourier-Transformierte g(x,y) wird in ein binarisiertes Bild umgewandelt. Binarisierung bedeutet, dass jedem Pixel des Bildes der Fourier-Transformierten entweder ein Pixelwert 1 oder ein Pixelwert 2 zugeordnet ist. Hierbei wird z. B. "schwarz" als Pixelwert 1 und "weiß" als Pixelwert 2 verwendet. Es sind jedoch auch zwei unterschiedliche Grauwerte oder auch zwei verschiedene Farbwerte denkbar. Zur Binarisierung sind verschiedene Verfahren aus der Literatur für computergenerierte Hologramme bekannt (z.B. das Detour-Phase Verfahren (Goodman, J. W., Introduction to Fourier Optics, Mc-Graw-Hill (New York) (1996)). Ein bevorzugtes Verfahren, das auch hier verwendet wird, ist die direkte Binarisierung des Realteils der Fourier-Transformierten g(x,y). Hierbei wird ein Schwellwert gewählt und alle Werte des Realteils der Fourier-Transformierten g(x,y), die unterhalb des Schwellwertes liegen, werden dem Pixelwert 1 zugeordnet und alle anderen Pixelwerte dem Pixelwert 2. Der Schwellwert kann so gewählt werden, und dieses ist in der Fig. 4 geschehen, dass ca. 50 % der Pixel den Pixelwert 1 und ca. 50 % der Pixel den Pixelwert 2 zugeordnet bekommen haben. Der Schwellwert kann aber auch so gewählt werden, dass jeder gewünschter, anderer Prozentsatz der Pixel den Pixelwert 1 bekommt und die restlichen Pixel den Pixelwert 2. Ein durch Binarisierung erzeugtes Bild 2 des Realteils der Fourier-Transformierten g(x,y) ist ein zweidimensionales, rechteckiges Pixelbild mit ebenfalls MxN Pixeln, das in Fig. 4 dargestellt ist und aussieht wie eine zufällige, ungefähr gleichverteilte Pixelverteilung. Dieses binarisierte Bild 2 ist zumindest Teil des erfindungsgemäßen Sicherheitselementes. Es kann auch selbst als Sicherheitselement verwendet werden. Das binarisierte Bild 2 wird im nächsten Schritt mit hoher Auflösung gedruckt.

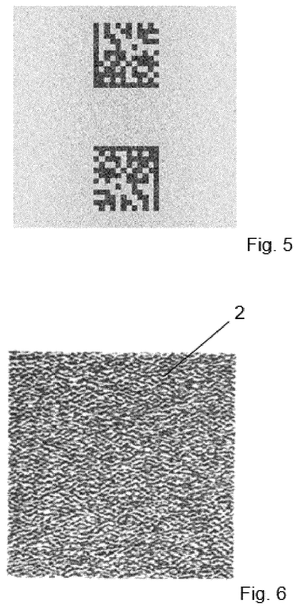

Fig. 6 zeigt ein Foto eines Ausdrucks des binarisierten Bildes 2, der mit einem Laserdrucker angefertigt wurde. Die verwendete Druckauflösung beträgt hier 600 DPI. Dadurch erhält das Bild mit 256 Pixeln Kantenlänge eine reale Kantenlänge von ca. 10,84 mm.

Die Pixelauflösung in x- oder y-Richtung des Druckers sollte dabei mindestens 300 DPI betragen. Es hat sich gezeigt, dass mit geringeren Druckauflösungen keine binarisierten Bilder gedruckt werden können, die als Sicherheitsmerkmale fungieren können.

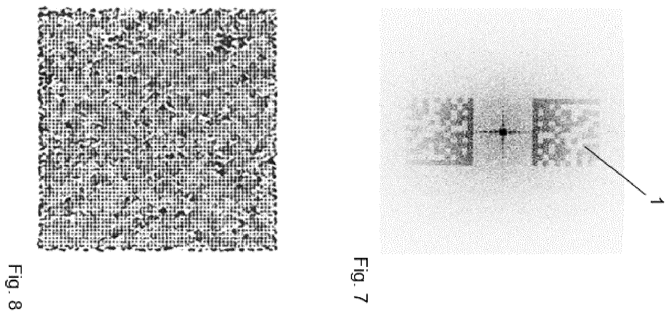

Die in Fig. 6 berechnete Mindestauflösung beträgt $\frac{300\ DPI}{0,29}$ in x-Richtung und $\frac{300\ DPI}{0,66}$ in y-Richtung, also 1034 DPI bzw. 455 DPI. Somit ist die Bedingung, dass die Mindestauflösung in zumindest einer Dimension erreicht ist, erfüllt. Bei Fig. 6 handelt es sich also um ein erfindungsgemäßes Sicherheitsmerkmal. Es ist gemäß Fig. 7 demnach auch zum 2D Barcode 1 rekonstruierbar.

Wenn die in dem binarisierten Bild 2 tatsächlich auftretenden Ortsfrequenzen kleiner sind als die theoretisch maximal mögliche Ortsfrequenz fy_limit, so muss eine entsprechend höhere Pixelauflösung gewählt werden, wenn das binarisierte Bild 2 ausgedruckt werden soll. Die in dem binarisierten Bild 2 auftretenden Ortsfrequenzen sind wiederum gegeben durch Position und Größe des maschinenlesbaren grafischen 2D Barcodes 1 in der zweidimensionalen Funktion G(fx,fy), wie in Fig. 3 dargestellt. Die verwendete Druckauflösung zum Ausdrucken des binarisierten Bildes 2 muss um einen Faktor erhöht werden, der dem Inversen des Verhältnisses Pfx bzw. Pfy entspricht. Somit sollte die verwendete Druckauflösung in x-Richtung mindestens $\frac{300\ DPI}{Pfx}$ oder in y-Richtung mindestens $\frac{300\ DPI}{Pfy}$ betragen. Sind die Werte in x- oder y-Richtung unterschiedlich, kann der kleinere Wert für die Druckauflösung gewählt werden. Es muss also diese Mindestauflösung zumindest in einer der beiden Dimensionen erreicht werden.

Die oben genannten Bedingungen führen dazu, dass die Ortsfrequenz, die zur vollständigen Rekonstruktion des maschinenlesbaren grafischen 2D Barcodes 1 benötigt wird, mindestens 300 DPI beträgt, also umgerechnet 11,8 Pixel pro mm. Wird das binarisierte Bild 2 z. B. fälschlicherweise mit einer geringeren Auflösung als 300 DPI ausgedruckt, so wird der 2D Barcode 1 der Fourier-Transformation unvollständig reproduziert, die Anteile der höheren Frequenzen fehlen. Das binarisierte Bild 2 wird als Teil des Sicherheitselementes noch robuster gegen Reproduktionsversuche, wenn die Mindestbedingung für die Druckauflösung höher gewählt wird, z. B. 450 DPI, 600 DPI, 800 DPI, 1000 DPI oder 1200 DPI. Die physikalischen Abmessungen des Bildes ergeben sich aus der Druckauflösung multipliziert mit der Pixelanzahl M bzw. N. Das Druckbild gemäß Fig. 6 sieht für den menschlichen Betrachter im Wesentlichen wie eine homogene Verteilung in einer zufälligen Struktur aus und wirkt dadurch unauffällig und versteckt.

Zur Überprüfung des Sicherheitselementes, das in diesem Fall aus dem binarisierten Bild 2 allein besteht, wird ein hochauflösendes Kamerabild des binarisierten Bildes 2 aufgenommen. Optional kann die genaue Position des binarisierten Bildes 2 im Kamerabild mittels Bildverarbeitungsmethoden ermittelt werden und ein Ausschnitt des binarisierten Bildes 2 gebildet werden. Das aufgenommene, resultierende Bild wird wiederum als Amplitudenfunktion oder als Phasenfunktion einer komplexen Funktion g2(x,y) interpretiert und die komplexe Funktion g2(x,y) wird anschließend Fourier-transformiert. Die Fourier-Transformation der komplexen Funktion g2(x,y) ist ein Bild mit dem maschinell lesbaren 2D Barcode 1. Alternativ zur Fourier-Transformation kann bei diesem Verfahren eine inverse Fourier-Transformation verwendet werden, da sich aufgrund der Symmetriebedingungen zwischen Fourier-Transformation und inverser Fourier-Transformation keine für die Erfindung relevanten Unterschiede ergeben.

Das Bild mit dem 2D Barcode 1 wird anschließend mit einem geeigneten Lesealgorithmus gelesen, der den maschinenlesbaren 2D Barcode 1 interpretiert. Das Ergebnis des Auslesens mittels des Algorithmus sagt zum einen aus, ob der 2D Barcode 1 überhaupt präsent ist und zum anderen, welche individuelle Seriennummer codiert wurde. Wenn der 2D Barcode 1 präsent ist, wird von der Echtheit des Sicherheitselementes, also hier des binarisierten Bildes 2, ausgegangen. Wenn der 2D Barcode 1 nicht präsent ist, wird das untersuchte Feature als nicht authentisch abgelehnt oder als verdächtig eingestuft. Die individuelle Seriennummer kann noch gegen eine Datenbank abgeglichen werden, wobei das Ergebnis des Datenbankabgleichs zu einer Änderung der Einstufung führen kann, also das Sicherheitsmerkmal trotz Präsenz des 2D Barcodes 1 als nicht authentisch abgelehnt oder als verdächtig eingestuft werden kann.

Die Idee der Erfindung beruht auf der überraschenden Erkenntnis, dass das erfindungsgemäß erzeugte und gedruckte, binarisierte Bild 2 mit handelsüblichen Kopierern und Druckern nicht derart kopiert werden kann, dass aus der Kopie wieder der ursprüngliche 2D Barcode 1 durch Fourier-Transformation ermittelbar ist. Überraschend ist dieses insofern, da die Nominalauflösung der Kopierer und Drucker dafür eigentlich ausreichen sollte. Diese Anti-Kopier-Eigenschaft beruht zum einen darauf, dass die realen Auflösungen von handelsüblichen Kopierern und Druckern oft deutlich unter den genannten Auflösungen stehen. Zum anderen wird bei einer Kopie eben nicht die Originalvorlage ausgedruckt, sondern der Scan oder eine Fotografie des schon ausgedruckten, binarisierten Bildes 2. Ein solcher Scan oder eine solche Fotografie liegt dementsprechend nicht als ursprüngliches, binarisiertes Bild 2 vor, sondern als ein Grauwertbild. Beim Versuch, das Grauwertbild zu drucken, wird ein handelsüblicher Drucker die Graustufen rastern. Dadurch geht Information von Substrukturen verloren.

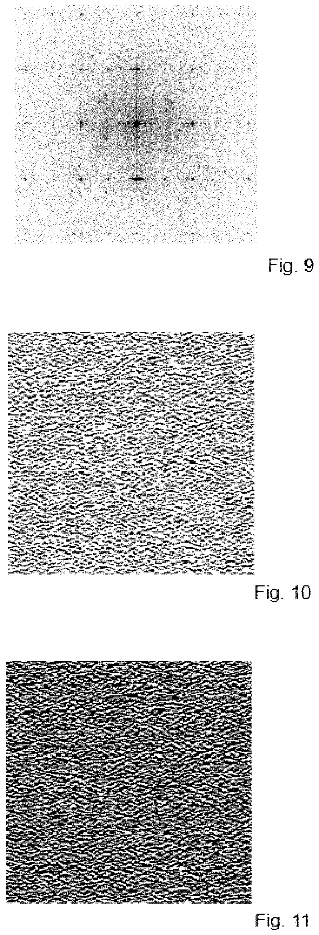

Fig. 8 zeigt ein Foto einer Kopie des beispielhaften erfindungsgemäßen Sicherheitselements aus Fig. 4. Die Kopie wurde mit einem Office-Kopierer erstellt, der eine Nominalauflösung von 600 DPI besitzt. Während Fig. 4 noch das ursprüngliche, binarisierte Bild 2 als Teil des Sicherheitsmerkmals zeigt, ist in Fig. 8 die Fotokopie desselben Sicherheitsmerkmals dargestellt. Es ist deutlich zu erkennen, dass eine Rasterstruktur über das binarisierte Bild 2 gelegt ist und sehr viel von der feinen Struktur des binarisierten Bildes 2 in Fig. 4 verlorengegangen ist. In der Kopie gemäß Fig. 8 gehen auf diese Weise insbesondere hohe Ortsfrequenzen des binarisierten Bildes 2 gemäß Fig. 4 verloren und werden durch die Rasterung zerstört. In der Fourier-Transformierten der Fotokopie des binarisierten Bildes 2 in Fig. 8, in der sich eigentlich der 2D Barcode 1 befindet, wird der 2D Barcode 1 beinahe vollständig zerstört. In dem Ausführungsbeispiel hier zeigt Fig. 9 die Fourier-Transformierte der Fotokopie des binarisierten Bildes 2 in Fig. 8. Es wird erkennbar, dass ein 2D Barcode 1 nicht mehr sichtbar ist und auch nicht ausgelesen werden kann. Wird die genannte Bedingung, dass die Ortsfrequenz, die zur vollständigen Rekonstruktion des maschinenlesbaren grafischen 2D Barcode 1 benötigt wird, mindestens 300 DPI entspricht, verletzt, so kann das binarisierte Bild 2 mit handelsüblichen Kopierern und Druckern erfolgreich kopiert werden, da die Substrukturen grob genug sind, sodass sie nicht durch Rasterung zerstört werden. Bei dem erfindungsgemäßen Sicherheitselement ist es also wichtig, dass die oben genannte Bedingung eingehalten wird, wodurch die Strukturen im binarisierten Bild 2 fein genug sind.

Das binarisierte Bild 2 kann, wie bereits gesagt, über verschiedene Weisen binarisiert werden. Insbesondere kann der Schwellwert unterschiedlich hoch gesetzt werden.

Fig. 10 zeigt ein binarisiertes Bild 2 der Funktion g(x,y) mit 40 % der Pixeln schwarz, während Fig. 11 das binarisierte Bild 2 der Funktion g(x,y) mit 60 % der Pixeln schwarz zeigt. Der Schwellwert ist also in Fig. 11 etwas tiefer gesetzt als in Fig. 10.

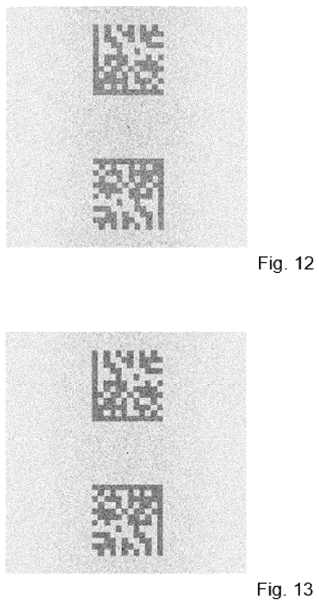

Die Fig. 12 und 13 zeigen die Fourier-Transformierte der binarisierten Bilder der Fig. 10 bzw. 11. In beiden Bildern ist der 2D Barcode 1 gut zu erkennen und auslesbar.

Darüber hinaus kann das binarisierte Bild 2 vor dem Druck durch weitere Verarbeitungsschritte in andere Formen oder Größen gebracht werden, ohne die Funktionalität des Sicherheitselementes zu zerstören. In einer Variante, die hier nicht dargestellt ist, wird, wenn eine größere Fläche für das Sicherheitselement benötigt wird, das binarisierte Bild 2 in x- oder y-Richtung beliebig oft wiederholt. Auf diese Weise können auch große Flächen mit dem Sicherheitselement belegt werden, ohne die Struktur neu berechnen zu müssen.

Insbesondere kann jedoch das binarisierte Bild 2 mit einem zweiten Bild verknüpft werden.

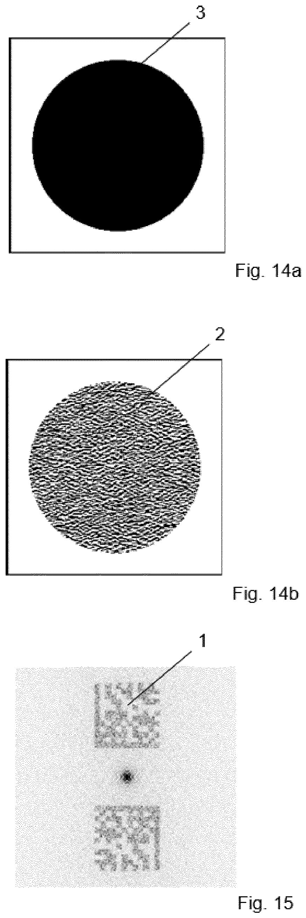

Fig. 14a zeigt ein zweites, binäres Bild 3, also ein Bild, das aus zwei Pixelwerten besteht und ebenfalls MxN Pixel aufweist. An den Stellen, an denen das binäre Bild 3 bspw. den Pixelwert 1 hat, also den Kreis darstellt, werden die Pixel aus dem binarisierten Bild 2 beibehalten; an den Stellen, an denen das binäre Bild 3 den Pixelwert 0 hat, werden die Pixel aus dem binarisierten Bild 2 nicht beibehalten, sondern auf Null gesetzt. Diese Verknüpfung entspricht einer logischen UND-Verknüpfung der beiden Bilder. Die Verknüpfung des binären Bildes 3 in Fig. 14a und des binarisierten Bildes 2 in Fig. 4 ist in der Fig. 14b dargestellt. Natürlich kann es sich bei dem binären Bild 3 auch um eine andere geometrische Form wie ein Dreieck, ein Rechteck, einen Stern oder auch um einen Text, wie z. B. eine Seriennummer, handeln.

Fig. 15 zeigt den aus dem verknüpften, binarisierten Bild 2 in Fig. 14b rekonstruierten 2D Barcode 1.

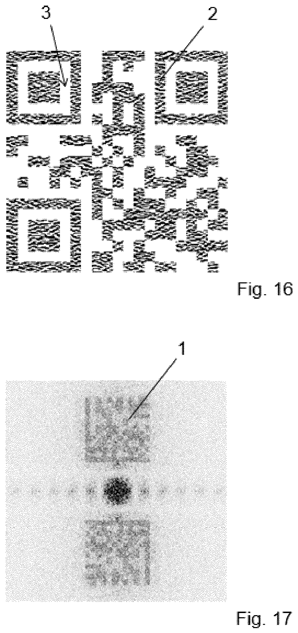

Fig. 16 zeigt eine logische UND-Verknüpfung des binarisierten Bildes 2 in Fig. 4 und eines QR Codes als binäres Bild 3. Das aus dem verknüpften Bild in Fig. 16 rekonstruierte Bild wird in Fig. 17 dargestellt. Auch hier ist der 2D Barcode 1 gut zu erkennen.

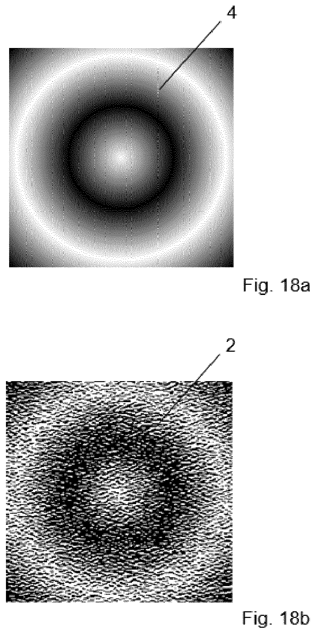

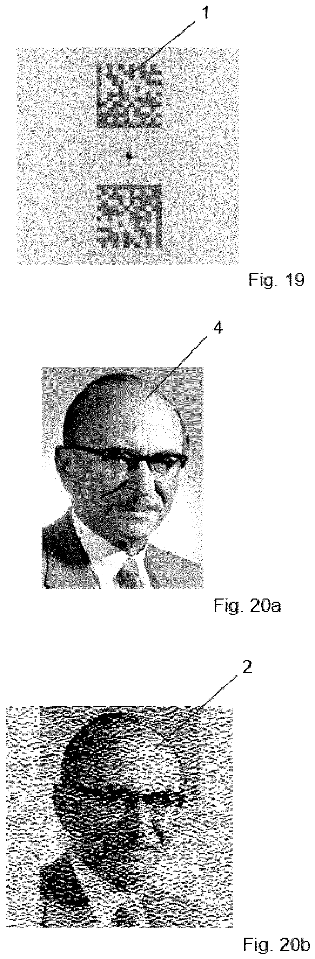

Die Verknüpfung mit einem zweiten Bild kann aber auch bereits beim Schritt der Binarisierung der Fourier-Transformierten geschehen. In diesem Fall kann das zweite Bild ein beliebiges Grauwertbild 4 sein, wie es bspw. in den Fig. 18a und 20a dargestellt ist. Jedem Pixel der Fourier-Transformierten wird ein Pixel des Grauwertbildes 4 zugeordnet. Der Schwellwert zum Binarisieren eines Pixels der Fourier-Transformierten wird dann abhängig vom Grauwert des zugeordneten Grauwertbildes 4 gewählt. Das Ergebnis ist ein binarisiertes Bild 2 der Figuren 18b bzw. 20b, wobei die Grauwerte durch die Pixeldichte repräsentiert sind und sich somit, ähnlich wie bei anderen Binarisierungsverfahren, ein Rasterbild ergibt.

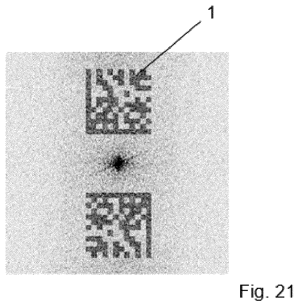

Die Funktionalität des Sicherheitselementes wird in Fig. 19 bzw. 21 dargestellt, sie ist nicht beeinträchtigt. Der 2D Barcode 1 ist in beiden Fällen lesbar.

**Bezugszeichenliste**

1      2D Barcode
2      binarisiertes Bild
3      binäres Bild
4      Grauwertbild

**Patentansprüche**

1. Verfahren zur Herstellung eines Sicherheitsmerkmals,
   indem
   eine Information als maschinell lesbarer, grafischer Code (1) zur Verfügung gestellt wird,
   der grafische Code (1) in eine zweidimensionale, diskrete, komplexe Funktion G(fx, fy) mit einer fx-Frequenzkoordinate und einer fy-Frequenzkoordinate eingebettet wird,
   die zweidimensionale, diskrete, komplexe Funktion G(fx, fy) Fourier-transformiert wird,
   und zu einem zweidimensionalen Bild (2) binarisiert wird und
   das zweidimensionale, binarisierte Bild (2) gedruckt wird,

**dadurch gekennzeichnet, dass**
entlang beider Frequenzkoordinaten fx, fy jeweils eine maximal genutzte Frequenz fx_max, fy_max und jeweils eine maximal erreichbare Frequenz fx_limit, fy_limit bestimmt werden,
entlang jeder Koordinate ein Verhältnis

$$\mathrm{Pfx} = \frac{\mathrm{Pfx\_max}}{\mathrm{Pfx\_limit}}, \quad \mathrm{Pfy} = \frac{\mathrm{Pfy\_max}}{\mathrm{Pfy\_limit}} \text{ von maximal}$$

genutzter Frequenz und maximal erreichbarer Frequenz bestimmt wird und
das binarisierte Bild (2) mit einer Pixelauflösung von mindestens dem kleineren der beiden Werte

$$\frac{300\,DPI}{\mathrm{Pfx}}, \quad \frac{300\,DPI}{\mathrm{Pfy}} \text{ gedruckt wird und}$$

das binarisierte Bild (2) zumindest als Teil des Sicherheitsmerkmals verwendet wird.

2. Verfahren nach Anspruch 1,
   **dadurch gekennzeichnet, dass** der grafische Code (1) in eine reelle Amplitudenfunktion der diskreten komplexen Funktion G(fx, fy) eingebettet wird.

3. Verfahren nach Anspruch 1 oder 2,
   **dadurch gekennzeichnet, dass** die zweidimensionale, diskrete Funktion G(fx, fy) Fourier-transformiert wird und ein Realteil einer Fourier-Transformierten g(x,y) der Funktion G(fx, fy) ermittelt wird.

4. Verfahren nach Anspruch 1, 2 oder 3,
   **dadurch gekennzeichnet, dass** der Amplitudenfunktion eine Phasenfunktion hinzugefügt wird, die ein Frequenzspektrum der Amplitudenfunktion glättet.

5. Verfahren nach einem der vorstehenden Ansprüche,
   **dadurch gekennzeichnet, dass** das binarisierte Bild (2) mit einer Pixelauflösung von mindestens dem kleineren Wert von $\frac{450\,DPI}{\mathrm{Pfx}}$, $\frac{450\,DPI}{\mathrm{Pfy}}$, vorzugsweise dem kleineren Wert von $\frac{600\,DPI}{\mathrm{Pfx}}$,

$\frac{600\,DPI}{\mathrm{Pfy}}$, vorzugsweise $\frac{800\,DPI}{\mathrm{Pfx}}$, $\frac{800\,DPI}{\mathrm{Pfy}}$, besonders bevorzugt $\frac{1000\,DPI}{\mathrm{Pfx}}$, $\frac{1000\,DPI}{\mathrm{Pfy}}$, besonders bevorzugt dem kleineren Wert von $\frac{1200\,DPI}{\mathrm{Pfx}}$,

$\frac{1200\,DPI}{\mathrm{Pfy}}$ gedruckt wird.

6. Verfahren nach einem der vorstehenden Ansprüche,
   **dadurch gekennzeichnet, dass** für die Binarisierung ein Schwellenwert verwendet wird, der ein binarisiertes Bild mit 50 % weißen und 50 % schwarzen Pixeln erzeugt.

7. Verfahren nach einem der vorstehenden Ansprüche, **dadurch gekennzeichnet, dass** das binarisierte Bild (2) wiederholt nebeneinander ausgedruckt wird.

8. Verfahren nach einem der vorstehenden Ansprüche, **dadurch gekennzeichnet, dass** das binarisierte Bild (2) mit einem binären Bild (3) UND-verknüpft wird.

9. Verfahren nach einem der vorstehenden Ansprüche, **dadurch gekennzeichnet, dass** der Realteil der Fourier-Transformierten g(x, y) mit einem lokal variablen Schwellenwert binarisiert wird, indem eine Höhe des Schwellenwerts lokal mit einem Grauwert eines Grauwertbildes (4) korreliert wird.

10. Verfahren nach einem der vorstehenden Ansprüche, **dadurch gekennzeichnet, dass** der Fourier-Transformierten g(x, y) ein Phasenschlüssel hinzugefügt wird und der Phasenschlüssel gespeichert wird.

11. Verfahren nach einem der vorstehenden Ansprüche, **dadurch gekennzeichnet, dass** Bereiche und/oder einzelne Pixel der Fourier-Transformierten g(x, y) miteinander verwürfelt werden und die Verwürfelung gespeichert wird.

12. Verfahren nach einem der vorstehenden Ansprüche, **dadurch gekennzeichnet, dass** das binarisierte Bild (2) digital gedruckt wird

13. Verfahren nach einem der vorstehenden Ansprüche, **dadurch gekennzeichnet, dass** es mittels eines Laserdruckers oder Tintenstrahldruckers gedruckt wird.

14. Verfahren nach einem der vorstehenden Ansprüche, **dadurch gekennzeichnet, dass** ein Schwellenwert verwendet wird, der an den Druckprozess angepasst ist,

15. Verfahren nach einem der vorstehenden Ansprüche, **dadurch gekennzeichnet, dass** das binarisierte Bild (2) nicht in schwarz, grau, cyan, magenta oder gelb gedruckt wird,

16. Verfahren nach Anspruch 15, **dadurch gekennzeichnet, dass** das binarisierte Bild in rot, blau oder grün gedruckt wird.

17. Verfahren zur Herstellung einer Serie von Sicherheitsmerkmalen nach jeweils einem der vorstehenden Ansprüche, **dadurch gekennzeichnet, dass** jedem der Sicherheitsmerkmale eine serialisierte Information zugeordnet wird.

18. Verfahren nach Anspruch 17, **dadurch gekennzeichnet, dass** als serialisierte Information eine Seriennummer und/oder ein Produktkennzeichen und/oder ein Personenkennzeichen verwendet wird.

19. Verfahren nach Anspruch 17 oder 18, **dadurch gekennzeichnet, dass** die serialisierte Information in einer Datenbank gespeichert wird.

20. Verfahren zur Authentifizierung eines gedruckten Sicherheitsmerkmals mit einem binarisierten Bild (2), indem
ein elektronisches Bild des Sicherheitsmerkmals aufgenommen wird,
das binarisierte Bild (2) in eine komplexe Funktion g2(x,y) eingebettet wird,
die komplexe Funktion g2(x, y) in eine komplexe Funktion G2(fx,fy) Fourier-transformiert wird,
**dadurch gekennzeichnet, dass** ein Lesealgorithmus auf die komplexe Funktion G2(fx,fy) angewendet wird und
das Sicherheitsmerkmal als authentisch bewertet wird, wenn der Lesealgorithmus einen grafischen Code (1) erkennt und
das Sicherheitsmerkmal als nicht authentisch bewertet wird, wenn der Lesealgorithmus keinen grafischen Code (1) erkennt.

21. Verfahren nach Anspruch 20, **dadurch gekennzeichnet, dass** der Lesealgorithmus auf eine Amplitudenfunktion der komplexen Funktion G2(fx,fy) angewendet wird.

22. Verfahren nach einem der Ansprüche 20 oder 21, **dadurch gekennzeichnet, dass** die ausgelesenen Daten mit Daten einer Datenbank verglichen werden und das Ergebnis des Vergleichs ausgewertet wird.

23. Verfahren nach einem der Ansprüche 20, 21 oder 22, **dadurch gekennzeichnet, dass** die Funktion g2(x,y) mit einem inversen Phasenschlüssel versehen wird und dann Fourier-transformiert wird.

24. Verfahren nach einem der Ansprüche 20 bis 23, **dadurch gekennzeichnet, dass** die Funktion g2(x,y) rückverwürfelt wird und dann Fourier-transformiert wird.

25. Sicherheitsmerkmal mit einem gedruckten, zweidimensionalen, binarisierten Bild (2), das durch Binarisierung aus einer Fourier-Transformierten g(x,y) berechnet ist, die die Fourier-Transformierte einer zweidimensionalen, diskreten, komplexen Funktion G(fx, fy) mit einer fx-Frequenzkoordinate und einer fy-Frequenzkoordinate ist, in der ein maschinenlesbarer grafischer Code (1) eingebettet ist, wobei entlang beider Frequenzkoordinaten fx, fy jeweils eine maximal genutzte Frequenz fx_max, fy_max und jeweils eine maximal erreichbare Frequenz fx_limit, fy_limit vorhanden ist,
**dadurch gekennzeichnet, dass**
entlang jeder Koordinate ein Verhältnis

$$Pfx = \frac{Pfx\_max}{Pfx\_limit} , \quad Pfy = \frac{Pfy\_max}{Pfy\_limit}$$ von maximal genutzter Frequenz und maximal erreichbarer Frequenz vorhanden ist und das binarisierte Bild (2) mit einer Pixelauflösung von mindestens dem kleineren der beiden Werte $\frac{300\,DPI}{Pfx}$ , $\frac{300\,DPI}{Pfy}$ gedruckt ist.

26. Sicherheitsmerkmal nach Anspruch 25,
**dadurch gekennzeichnet, dass** das binarisierte Bild (2) mit einer Pixelauflösung von mindestens dem kleineren Wert von $\frac{450\,DPI}{Pfx}$ , $\frac{450\,DPI}{Pfy}$ , vorzugsweise dem kleineren Wert von $\frac{600\,DPI}{Pfx}$ ,

$\frac{600\,DPI}{Pfy}$ , vorzugsweise $\frac{800\,DPI}{Pfx}$ , $\frac{800\,DPI}{Pfy}$ , besonders bevorzugt $\frac{1000\,DPI}{Pfx}$ , $\frac{1000\,DPI}{Pfy}$ , besonders bevorzugt dem kleineren Wert von $\frac{1200\,DPI}{Pfx}$ ,

$\frac{1200\,DPI}{Pfy}$ gedruckt ist.

27. Serie von Sicherheitsmerkmalen nach jeweils einem der Ansprüche 25 oder 26,
**dadurch gekennzeichnet, dass** der grafische Code (1) jedes Sicherheitsmerkmals eine serialisierte Information aufweist.

28. Serie nach Anspruch 27,
**dadurch gekennzeichnet, dass** die serialisierte Information eine Seriennummer und/oder ein Produktkennzeichen und/oder ein Personenkennzeichen umfasst.

29. Serie nach Anspruch 27 oder 28,
**dadurch gekennzeichnet, dass** die serialisierte Information in einer Datenbank gespeichert ist.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

3

Fig. 14a

2

Fig. 14b

1

Fig. 15

Fig. 16

Fig. 17

Fig. 18a

Fig. 18b

Fig. 19

Fig. 20a

Fig. 20b

Fig. 21

Europäisches Patentamt

European Patent Office

Office européen des brevets

## EUROPÄISCHER RECHERCHENBERICHT

Nummer der Anmeldung

EP 18 16 6082

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 201 741 328 U (BEIJING RES CT AGRI INF TECH) 9. Februar 2011 (2011-02-09) * das ganze Dokument * ----- | 1-29 | INV. B42D25/305 B41M3/14 G06K19/06 G07D7/0043 |
| | | | **RECHERCHIERTE SACHGEBIETE (IPC)** B42D B41M G06K G07D |

Der vorliegende Recherchenbericht wurde für alle Patentansprüche erstellt

| Recherchenort | Abschlußdatum der Recherche | Prüfer |
|---|---|---|
| München | 2. August 2018 | Achermann, Didier |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

                                                       
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 16 6082

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-08-2018

| Im Recherchenbericht angeführtes Patentdokument | Datum der Veröffentlichung | Mitglied(er) der Patentfamilie | Datum der Veröffentlichung |
|---|---|---|---|
| CN 201741328 U | 09-02-2011 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19806295 A1

- US 20100060944 A1

**In der Beschreibung aufgeführte Nicht-Patentliteratur**

- **GOODMAN, J. W.** Introduction to Fourier Optics. Mc-Graw-Hill, 1996

- **AKAHORI, H.** Comparison of deterministic phase coding with random phase coding in terms of dynamic range. *Appl. Opt.,* 1973, vol. 12, 2336-43